**Europäisches Patentamt**

**European Patent Office**

**Office européen des brevets**

(19)

(11) Numéro de publication: **0 043 822**
**B1**

(12) # FASCICULE DE BREVET EUROPEEN

(45) Date de publication du fascicule du brevet:
**30.11.83**

(51) Int. Cl.³: **B 23 K 7/06**, F 23 D 13/34

(21) Numéro de dépôt: **81900210.6**

(22) Date de dépôt: **14.01.81**

(86) Numéro de dépôt international:
**PCT/FR 81/00005**

(87) Numéro de publication internationale:
**WO 81/01973 (23.07.81 Gazette 81/17)**

(54) **PROCEDE DE DECRIQUAGE ET CHALUMEAU MULTIFORME POUR LA MISE EN OEUVRE DU PROCEDE.**

(30) Priorité: **18.01.80 FR 8001555**

(43) Date de publication de la demande:
**20.01.82 Bulletin 82/3**

(45) Mention de la délivrance du brevet:
**30.11.83 Bulletin 83/48**

(84) Etats contractants désignés:
**DE GB LU NL SE**

(56) Documents cités:
**DE - A - 1 529 207**
**DE - C - 299 902**
**DE - C - 628 135**

(73) Titulaire: **ETABLISSEMENTS SOMALOR-FERRARI "SOMAFER", Route de Vitry, F-57270 Uckange (FR)**

(72) Inventeur: **DONZE, Michel, 10 Rue Roger Bérin, F-54270 Essey-les-Nancy (FR)**

(74) Mandataire: **Michon du Marais, Loys, PECHINEY UGINE KUHLMANN 28, rue de Bonnel, F-69433 Lyon Cédex 3 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

Procede de decriquage et chalumeau multiforme pour la mise en oeuvre du procede

L'amélioration constante de la qualité exigée par les produits en acier, conjugée avec les économies à réaliser sur les coûts de production, provoquent en amont, dans la fabrication des aciers, une recherche incessante de l'amélioration de la qualité et, en particulier, de l'état de surface des demi-produits (lingots, blooms, brames, billettes, etc. . . .).

Le décriquage au chalumeau est un procédé connu, permettant de brûler par un jet d'oxygène pur le métal malsain, c'est-à-dire d'éliminer les défauts superficiels: criques, failles, brûlures et inclusions.

Le procédé, tel que décrit dans le brevet allemand 299 902 et dont les caractéristiques constituent la partie préambulaire de la revendication 1 de la présente demande consiste à utiliser d'une part de l'oxygène destiné à la coupe proprement dite et émis par une buse centrale, d'autre part de l'oxygène (O) et du gaz combustible (H) émis par d'autres buses situées autour de la buse centrale et dont la combinaison provoque la formation de flammes de chauffage. L'ensemble de ces buses forment un chalumeau dont on peut régler la puissance en fonction du débit d'oxygène admis et de l'orientation.

Ce chalumeau peut être manuel ou supporté par une machine. Pour le chalumeau utilisé sur une machine, il est connu de travailler suivant deux méthodes très différentes:

## 1. Méthode à grande vitesse, dite de lavage ou de »scarfing«

Cette méthode consiste à brûler toute la surface du demi-produit sur une épaisseur constante, définie par statistique, et prévoyant d'enlever une proportion importante des défauts de surface, étant admis qu'un contrôle ultérieur et une réparation complémentaire du demi-produit parachève le travail.

Il est connu d'utiliser à cet usage des machines supportant une rampe de chalumeaux à oxygène disposés en parallèle en formant un bain de combustion rectiligne, qui se déplace transversalement au demi-produit en balayant toute sa surface. Même si la puissance, c'est-à-dire le débit, des chalumeaux est programmée en fonction des défauts observés, du métal est brûlé sur toute la surface métallique du demi-produit. Cette méthode a le grave défaut d'entraîner une perte de métal importante.

## 2. Méthode sélective

On emploie des machines dites sélectives sur lesquelles sont montés de gros chalumeaux, à section cylindrique, manipulés à vue par l'opérateur. Cette méthode, moins rapide, permet de n'enlever que les parties du métal malsaines.

Leur avantage réside dans l'amélioration du rendement matière par le fait même que l'enlèvement du métal est contrôlé par l'opérateur qui en reste maître et ne brûle pas de métal sain.

Par contre, les performances de ces machines en surface traitée par unité de temps, sont directement dépendantes de la puissance du chalumeau.

Les solutions actuelles sont donc basées sur une puissance de chalumeau représentant un compromis entre les besoins du sélectif et la productivité sur grande surface.

Il est connu, par ailleurs:

a) de faire des chalumeaux plus ou moins gros permettant une zone de combustion plus ou moins grande, donc permettant par le déplacement du bain de combustion plus ou moins grand, d'enlever plus ou moins de métal à vitesse constante.

b) de faire déplacer la zone de combustion plus ou moins vite et, donc de brûler plus ou moins de métal avec le même chalumeau suivant la vitesse de déplacement.

c) que la forme de la zone de combustion détermine le profil restant sur la pièce traitée après brûlage.

d) que la combustion du métal entraîne la formation de scories liquides qui se solidifient instantanément hors de l'action de la zone de combustion.

e) que, pour certaines nuances d'acier, en particulier les nuances peu cargées en carbone, la partie de métal sous la zone de combustion est portée à fusion sans oxydation, que l'énergie cinétique de l'oxygène projette ce métal en fusion avec les scories hors de la zone de combustion et que sa solidifiaction brutale entraîne la formation de bavures adhérentes.

f) que l'orientation du jet d'oxygène permet de modifier la surface de la zone de combustion donc, de modifier le profil restant sur la pièce traitée.

g) que, pour un surfaçage léger, un jet d'oxygène en forme de pinceau plat permet une zone de combustion rectangulaire dont le petit côté peut être réduit, entraînant une faible épaisseur de métal enlevé sur une grande surface.

h) que, pour obtenir l'un au l'autre des résultats énumérés suivant les 7 points qui précédent, il faut utiliser des chalumeaux de forme ou de puissance différentes.

L'objet de notre invention est de définir un procédé de décriquage qui soit sélectiv, c'est-à-dire ne brûle que le minimum de métal à la surface du demi-produit, ceci avec cependant une forte productivité en brûlant très rapidement le maximum du métal malsain là ou cela est nécessaire.

Ce procédé consiste à faire un décriquage sélectif par un jet d'oxygène multiforme selon la partie caractérisante de la revendication 1, c'est-à-dire un décriquage par un jet d'oxygène de puissance réglable et entouré de flammes de chauffage, ceci comme dans l'art l'art antérieur, mais dont on fait également varier la section transversale, cette section variant tant dans sa surface que dans sa forme dès la sortie de la buse. Ce jet d'oxygène variant tant en puissance, c'est-à-dire en débit qu'en section, est réalisé par le fait que l'on n'utilise pas un jet unique émis par une tuyère unique, mais le regroupement de jets élémentaires disposés en faisceau compact et réglés individuellement ou par secteur, leur orientation étant globalement réglable.

Les flammes de chauffage entourant le faisceau sont également commandées individuellement ou par secteur. On a ainsi à chaque instant un jet d'oxygène dont la puissance et la section s'adaptent globalement à la profondeur, la surface et la nature des défauts à éliminer.

La forme et la puissance du jet varient indépendamment. On peut avoir un jet long et étroit formé par quelques jets élémentaires fonctionnant à fort débit, un jet court et large formé par l'ensemble des jets fonctionnant chacun à faible débit.

La section du jet peut avoir des formes très diverses telles que ronde, ovale ou rectangulaire, selon le nombre et la disposition des jets en fonctionnement.

Pour avoir cette souplesse, les jets élémentaires sont regroupés en faisceau compact dont la section est sinon circulaire, du moins de dimensions comparables en longueur et en épaisseur.

L'objet de l'invention est également de définir un chalumeau pour la mise en oeuvre du procédé. A la différence de l'art antérieur constitué par le DE-C 299 902, dans lequel on enseigne une buse d'oxygène centrale monojet entourée de buses de chauffage alimentées les unes en oxygène, les autres en gaz, le chalumeau selon l'invention comporte une buse d'oxygène scindée en plusieurs tuyères parallèles et jointives regroupées en un faisceau compact. Ce faisceau est lui-même entouré de buses formant chacune un brûleur pour le gaz de chauffage. Les tuyères et les brûleurs sont pourvus de moyens d'alimentation individuels en gaz respectivement oxygène ou mélange de chauffe; chacun de ces moyens d'alimentation est réglable individuellement. La section du faisceau de tuyères est le plus souvent circulaire, mais elle peut avoir d'autres formes, tels que des sections ovales ou rectangulaires.

Ainsi, le chalumeau selon l'invention peut, suivant les besoins, se transformer instantanément en chalumeau à section cylindrique, en chalumeau à section plane pour surfaçage à faible profondeur, ou en chalumeau à section elliptique permettant une solution intermédiaire entre les chalumeaux à jet plat et les chalumeaux à jet cylindrique, ou même en chalumeau à section la mieux adaptée au défaut à éliminer. Ceci permet de faire varier instantanément la profondeur du métal enlevé à la vue d'un défaut plus ou moins profond au cours d'une opération de surfaçage.

L'invention sera mieux comprise par la description d'un chalumeau selon l'invention correspondant schématiquement aux deux figures jointes, ainsi qu'à l'exposé du mode d'emploi de ce chalumeau. Le chalumeau décrit ci-après n'est défini qu'à titre d'exemple non limitatif.

La figure 1 représente schématiquement, en vue face, l'orifice de sortie du chalumeau.

La figure 2 représente schématiquement, en coupe transversale, quelques formes de jets d'oxygène obtenus avec le chalumeau selon l'invention.

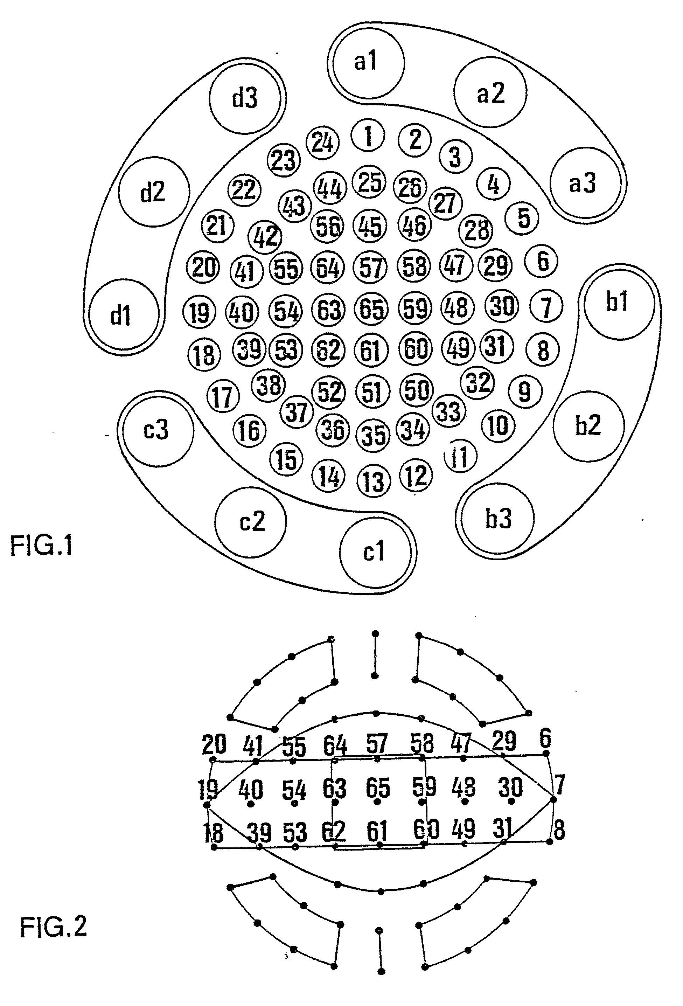

Le chalumeau, dont l'extrémité est représentée en figure 1, est formé par un faisceau de 65 tuyères à oxygène, de diamètre 8 mm au col, soit à la sortie un diamètre de 12 mm et une distance entre axes de l'ordre de 13 mm. Ces tuyères sont numérotées sur la figure de 1 à 65. Ces 65 tuyères jointives permettent chacune l'émission d'un jet d'oxygène de l'ordre de 20 à 60 $m^3$/h, soit au total un maximum de l'ordre de 4000 $m^3$/h. Les 65 tuyères à oxygène sont entourées par 12 buses ou brûleurs pour gaz de chauffage, de diamètre 30 mm. Ces 12 brûleurs sont répartis entre quatre secteurs a, b, c, d, et peuvent être commandés individuellement ou par secteur.

Sur la figure 2, sont figurées les sections des jets d'oxygène obtenus en n'utilisant qu'une partie ou l'autre des tuyères. Ainsi, avec les tuyères centrales 57, 58, 59, 60, 61, 62, 63, 64, 65, on obtient un jet d'oxygène de relativement faible section adapté au brûlage d'un défaut de faible surface.

L'utilisation des tuyères selon une section transversale telle que les tuyères 6, 7, 8, 18, 19, 20, 29, 30, 31, 39, 40, 41, 47, 48, 49, 53, 54, 55, 57, 58, 59, 60, 61, 62, 63, 64, 65, donne un jet plat adapté au brûlage à l'oxygène de défauts larges et peu profonds sur un produit à surfacer totalement. On peut aussi utiliser pour les défauts superficiels le groupement 7, 29, 30, 31, 47, 48, 49, 54, 54, 55, 39, 40, 41, 19.

Sur la figure 2, sont figurées également d'autres associations de tuyères à oxygène donnant globalement des jets à section variable adaptés au brûlage de défauts caractéristiques très divers.

On voit que le procédé consiste à utiliser le nombre et la disposition des tuyères permettant de former globalement un jet d'oxygène de section variable qui est ainsi, à chaque instant, le mieux adapté au défaut rencontré, et ceci indépendamment de la pression de l'oxygène alimentant chacune des tuyères. Cette pression peut rester constante par exemple si la profondeur du défaut ne varie pas. On peut vraiment donner à ce chalumeau, le nom de chalumeau multiforme. Rien n'empêche cependant de faire varier, à chaque instant, la pression de l'oxygène alimentant chacune des tuyères. Cela apporte une possibilité supplémentaire de sélectivité instantanée, en adaptant le débit d'oxygène à la profondeur des défauts rencontrés.

On comprend qu'un chalumeau de cette dimension mettant en jeu des débits de gaz importants ne peut être manipulé à la main, Il doit être adapté sur un manipulateur robot, qui permet de régler librement son orientation et ses déplacements.

Les brûleurs de chauffage $a_1$, $a_2$, $a_3$, $b_1$, $b_2$, $b_3$, $c_1$, $c_2$, $c_3$, $d_1$, $d_2$, $d_3$, peuvent également être commandés individuellement ou par secteurs a, b, c, d, ceci selon le chauffage nécessaire tant en intensité qu'en surface.

Les 65 tuyères du chalumeau représenté sont réparties selon un faisceau à section circulaire. Pour certaines utilisations particulières, on pourrait également rassembler des tuyères selon un faisceau à section différente, par exemple une section rectangulaire, ovale ou elliptique.

## Revendications

1. Procédé de décriquage par un jet d'oxygène de puissance et d'orientation réglables entouré par des flammes de chauffage, caractérisé en ce qu'au cours du décriquage on fait varier la section dudit jet aussi bien dans sa forme que sa surface, ceci indépendamment de sa puissance.

2. Procédé de décriquage selon revendication 1, caractérisé en ce que l'on réalise le jet d'oxygène par regroupement de jets élémentaires parallèles disposès en faisceau compact et réglés individuellement.

3. Procédé de décriquage selon l'une quelconque des revendications 1 ou 2, caractérisé en ce que l'on forme les flammes de chauffage à partir de flammes élémentaires disposées à la périphérie et commandées individuellement ou par secteur.

4. Chalumeau multiforme pour la mise en oeuvre du procédé de décriquage selon l'une quelconque des revendications 1, 2 ou 3, dans lequel on a une buse d'oxygène centrale entourée de buses destinées au chauffage, caractérisé en ce que la buse d'oxygène est scindée en plusieurs tuyères jointives regroupées en faisceau compact, et que ce faisceau est entouré de buses formant chacune un brûleur pour le chauffage, ces tuyères et brûleurs étant pourvus de moyens d'alimentation individuels en gaz respectivement oxygène ou mélange de chauffe, chacun de ces moyens d'alimentation étant réglable individuellement.

5. Chalumeau selon revendication 4, caractérisé en ce que la section du faisceau de tuyères parallèles et jointives est sensiblement circulaire.

6. Chalumeau selon revendication 4, caractérisé en ce que la section du faisceau de tuyères parallèles et jointives est rectangulaire.

7. Chalumeau selon revendication 4, caractérisé en ce que la section du faisceau de tuyères parallèles et jointives est elliptique.

## Patentansprüche

1. Verfahren zum Brennflämmen mittels eines Sauerstoffstrahls von regelbarer Leistung und Ausrichtung, der von Heizflammen umgeben ist, dadurch gekennzeichnet, daß im Verlauf des Brennflämmens der Querschnitt des Strahls hinsichtlich seiner Form und Oberfläche unabhängig von seiner Leistung verändert wird.

2. Verfahren zum Brennflämmen nach Anspruch 1, gekennzeichnet durch Bilden des Sauerstoffstrahls durch Gruppieren von Einzelstrahlen, die als Bündel parallel angeordnet sind und einzeln geregelt werden.

3. Verfahren zum Brennflämmen nach einem der Ansprüche 1 oder 2, gekennzeichnet durch Formen der Heizflammen durch Einzelflammen, die am Umfang angeordnet sind und einzeln oder sektorweise gesteuert werden.

4. Vielförmiger Brenner zur Durchführung des Brennflämmverfahrens nach einem der Ansprüche 1, 2 oder 3, dadurch gekennzeichnet, daß die Sauerstoffdüse in mehrere aneinandergrenzende und als kompaktes Bündel gruppierte Düsen unterteilt ist, und daß dieses Bündel von Düsen umgeben ist, die jeweils einen Brenner für das Heizen bilden, wobei diese Düsen und Brenner mit Einrichtungen versehen sind zum einzelnen Speisen mit Gas bzw. Sauerstoff oder Heizgemisch, wobei jede dieser Speiseeinrichtungen einzeln regelbar ist.

5. Brenner nach Anspruch 4, dadurch gekennzeichnet, daß der Querschnitt des Brenners aus parallelen und aneinandergrenzenden Düsen im wesentlichen kreisförmig ist.

6. Brenner nach Anspruch 4, dadurch gekennzeichnet, daß der Querschnitt des Bündels aus parallelen und aneinandergrenzenden Düsen rechteckig ist.

7. Brenner nach Anspruch 4, dadurch gekennzeichnet, daß der Querschnitt des Bündels aus parallelen und aneinandergrenzenden Düsen elliptisch ist.

## Claims

1. A process for removing cracks by a jet of oxygen, of adjustable strength and direction, which is surrounded by heating flames, characterised in that during the crack removal operation, the section of said jet ist varied both in shape and in area, independently of its strength.

2. A crack removal process according to claim 1 characterised in that the jet of oxygen is produced by combining parallel component jets which are disposed in an compact cluster and individually controlled.

3. A crack removal process according to either one of claims 1 and 2 characterised in that the heating flames are formed from component flames disposed at the periphery and controlled individually or in sectors.

4. A multiple-shape torch for carrying out the crack removal process according to any one of claims 1, 2 and 3 wherein there ist a central oxygen nozzle surrounded by nozzles for the heating action, characterised in that the oxygen nozzle is divided into a plurality of contiguous pipes which are disposed in a compact cluster, and that said cluster is surrounded by nozzles each forming a burner for the heating operation, said pipes and burners being provided with individual means for the supply of gas, oxygen or a heating mixture respectively, each of said supply means being individually controllable.

5. A torch according to claim 4 characterised in that the cross-section of the cluster of parallel, contiguous pipes is substantially circular.

6. A torch according to claim 4 characterised in that the cross-section of the cluster of parallel, contiguous pipes is rectangular.

7. A torch according to claim 4 characterised in that the cross-section of the cluster of parallel, contiguous pipes is elliptical.

FIG.1

FIG.2